## Europäisches Patentamt
## European Patent Office
## Office européen des brevets

(19)

(11) Numéro de publication: **0 209 423 B1**

(12) **FASCICULE DE BREVET EUROPEEN**

(45) Date de publication du fascicule du brevet:
24.05.89

(51) Int. Cl.⁴: **B 60 J 1/17**

(21) Numéro de dépôt: **86401275.2**

(22) Date de dépôt: **12.06.86**

(54) Dispositif de récupération d'eau pour système d'étanchéité de vitre mobile de véhicule automobile.

(30) Priorité: **12.06.85 FR 8508855**

(43) Date de publication de la demande:
**21.01.87 Bulletin 87/4**

(45) Mention de la délivrance du brevet:
**24.05.89 Bulletin 89/21**

(84) Etats contractants désignés:
**BE DE GB IT**

(56) Documents cités:
**DE-A- 1 947 386**
**GB-A- 2 052 614**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Feuvrier, Alain, 28, avenue Gabriel Péri,
F-91150 Paray Vieille Poste (FR)**
Inventeur: **Guillou, Michel, 4, Villa des Clos,
F-78860 Saint Nom La Breteche (FR)**

(74) Mandataire: **Chassagnon, Jean-Alain et al, REGIE
NATIONALE DES USINES RENAULT (S.0804),
F-92109 Boulogne-Billancourt Cedex (FR)**

ACTORUM AG

## Description

L'invention est relative à un dispositif de récupération d'eau pour système d'étanchéité de vitre mobile, notamment pour les portes d'un véhicule automobile.

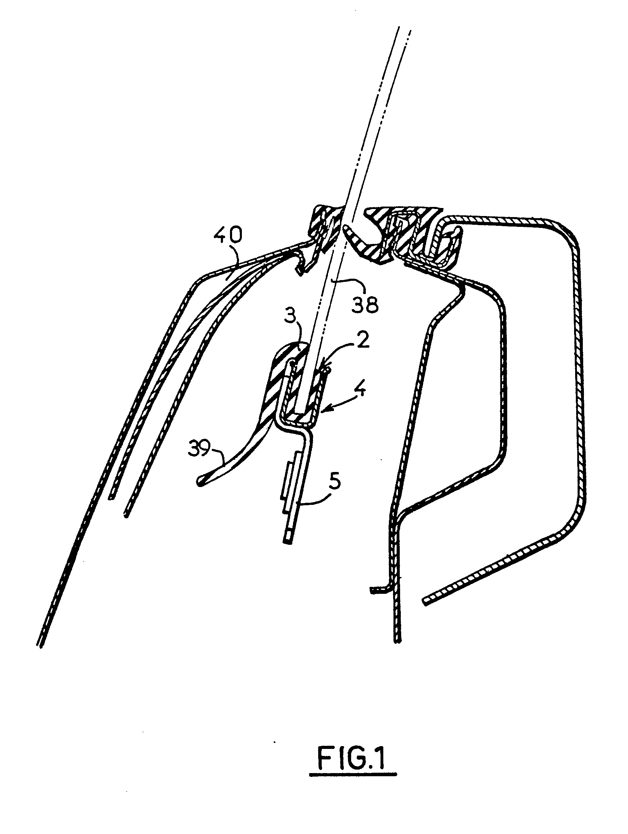

On connaît déjà des dispositifs de récupération d'eau, comme celui qui est représenté en coupe sur la figure 1. Ce dispositif est destiné à récupérer l'eau d'une vitre descendante 38, qui est montée dans une porte avant 40 d'un véhicule automobile. Un joint de calage 39 est disposé à la partie inférieure de la vitre 38, et il descend avec ladite vitre. Ce joint de calage 39 est engagé dans un bas de vitre 4, qui est solidaire d'une attache 5. L'attache 5 a pour fonction d'assurer la liaison avec le mécanisme de lève-vitre. L'extrémité du joint de calage 39 se termine par une lèvre recourbée, comme cela est représenté sur la figure 1, de manière à guider l'eau de ruissellement de la vitre 38, vers le panneau extérieur de la porte 40; afin de pouvoir canaliser cette eau à la partie inférieure de la porte jusqu'à des orifices d'évacuation.

Ce dispositif connu présente l'inconvénient d'entraîner des difficultés du galbe fonctionnel de l'extrémité du joint de calage 39. De plus dans certaines configurations du véhicule par rapport à la route, le but recherché risque de ne pas être atteint. Cela peut se rencontrer lors du stationnement du véhicule sur un trottoir avec les essieux non horizontaux, ce qui peut amener l'eau de ruissellement à l'avant ou à l'arrière de la porte, ou supprimer l'effet du galbe du joint de calage 39, quand la voiture est inclinée transversalement. Ces inconvénients obligent à prévoir des étanchéités supplémentaires sur les éléments de la porte, et cela est d'autant plus gênant et coûteux que sur les voitures modernes, il est disposé de nombreux accessoires sur les portières tels que des hauts-parleurs, des dispositifs à commande électrique et des ensembles de serrures qui nécessitent des cavités, lesdites cavités n'étant pas toujours utilisées sur les portes standard. De plus il est nécessaire de prévoir que toutes les fixations sur la porte soient étanches.

Un autre type de dispositif connu est représenté sur le document GB-A-2 052 614.

Le but de la présente invention est de proposer un dispositif de récupération d'eau de ruissellement, pour les vitres mobiles des portières d'un véhicule automobile, qui permettent d'éviter toutes fuites intempestives, et d'être certain de canaliser l'eau de ruissellement; et cela quelque soit les circonstances.

Selon un mode de réalisation de l'invention, le dispositif de récupération d'eau pour système d'étanchéité de vitre mobile, notamment pour les portes d'un véhicule automobile, tel qu'il est défini dans le préambule de la revendication 1 et du type divulgué par GB-A-2 052 614, est caractérisé par les caractéristiques techniques contenues dans la partie caractérisante de la revendication 1.

Selon un mode de réalisation de l'invention, la gouttière est fermée à une de ses extrémités par une paroi d'extrémité.

Selon un mode de réalisation de l'invention, la gouttière a ses deux extrémités, qui sont fermées respectivement par des parois d'extrémités.

Selon un mode de réalisation de l'invention, l'orifice d'écoulement a une languette d'écoulement.

Selon un mode de réalisation de l'invention, une des extrémités de la gouttière comporte une languette d'écoulement.

Selon un mode de réalisation de l'invention, le dispositif mécanique de tenue de la vitre comprend:
— un bas de vitre métallique solidaire d'une attache qui est associée au mécanisme de lève-vitre,
— deux agrafes de maintien.

Selon un mode de réalisation de l'invention, la gouttière et le joint de maintien sont conformés de manière à ce que leurs parois internes respectives soient reliées par un élément de liaison, et soient munies de cloisons de façon à délimiter des zones pour recevoir le bas de vitre métallique avec l'attache, et les deux agrafes de maintien, les parois internes étant dans un même plan dans les autres zones du dispositif de récupération d'eau.

Selon un mode de réalisation de l'invention, le dispositif mécanique de tenue de vitre comprend une attache solidaire du joint de maintien; et qui est associée au mécanisme de lève-vitres; la paroi interne de la gouttière et la paroi interne du joint de maintien étant dans le même plan.

Le dispositif de récupération d'eau pour système de vitre mobile selon l'invention, présente ainsi l'avantage d'amener l'eau de ruissellement où l'on veut, quelque soit la position du véhicule. De plus le dispositif selon l'invention permet de supprimer toutes les étanchéités supplémentaires, et cela est surtout vrai pour les organes électriques. On peut aussi, grâce au dispositif de l'invention, laisser tous les trous et cavités non utilisés sur les portes standard sans à avoir à utiliser des bouchages particuliers. Enfin toutes les fixations sur la porte peuvent être non étanches. Le dispositif de récupération d'eau selon l'invention tout en garantissant une étanchéité parfaite permet ainsi de réaliser des économies importantes sur une portière complètement montée.

L'invention sera mieux comprise par l'étude d'un mode de réalisation particulier décrit à titre nullement limitatif et illustré par les dessins, sur lesquels:

la figure 2 est une coupe du dispositif de récupération d'eau selon l'invention;

la figure 3 est une vue longitudinale du dispositif selon l'invention correspondant à la figure 2;

la figure 4 est une vue suivant IV-IV de la figure 3;

la figure 5 est une vue de détails de la figure 3;

la figure 6 est une coupe suivant VI-VI de la figure 3;

la figure 7 est une coupe suivant VII-VII de la figure 3;

la figure 8 est une coupe suivant VIII-VIII de la figure 3;

la figure 9 est une coupe suivant IX-IX de la figure 3;

la figure 10 est une vue suivant X-X de la figure 3;

la figure 11 est une coupe suivant XI-XI de la figure 3;

la figure 12 est une vue de dessus de la figure 3;

la figure 13 est une coupe identique à la figure 2 d'un autre mode de réalisation de l'invention.

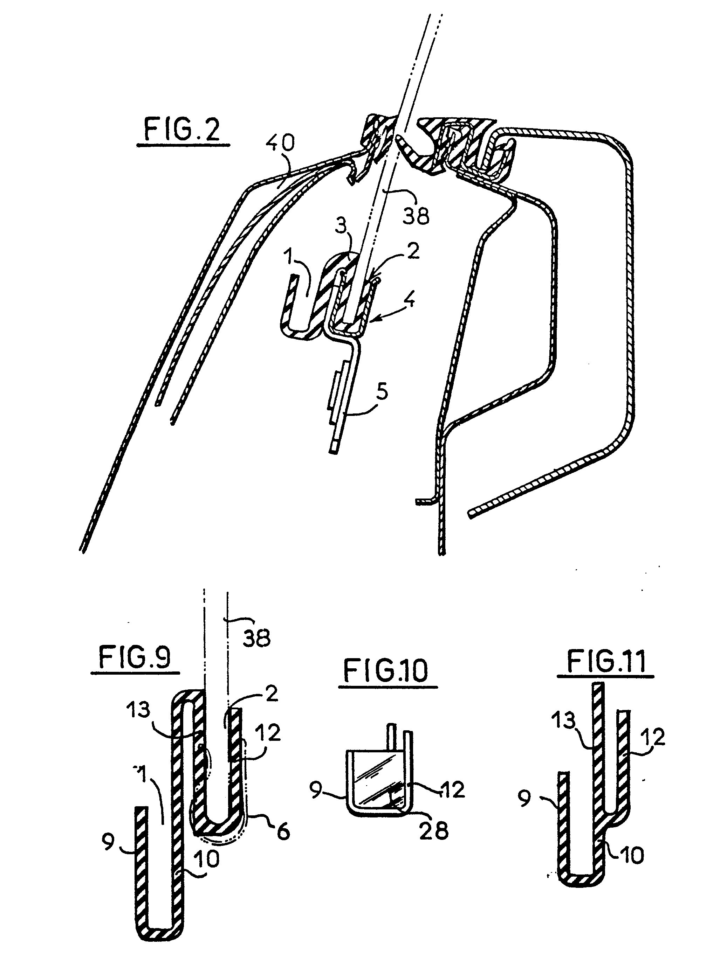

Le dispositif de récupération d'eau pour système d'étanchéité de vitre mobile, selon l'invention, est représenté sur la figure 2. Ce dispositif de récupération d'eau comporte une gouttière 1 qui est solidaire d'un joint de maintien 2 de la vitre mobile 38. Le joint de maintien 2, équipé de la vitre mobile 38, vient s'engager dans un dispositif mécanique de tenue de la vitre. Ce dispositif comporte un bas de vitre métallique 4 solidaire d'une attache 5, qui est associée au mécanisme de lève-vitre. L'ensemble peut ainsi coulisser librement dans la portière 40 du véhicule automobile. De plus le dispositif mécanique de tenue de vitre comprend deux agrafes de maintien 6 qui viennent appliquer le joint de maintien 2 sur la vitre 38.

La gouttière 1 comprend deux parois une paroi externe 9, et une paroi interne 10 qui sont reliées par un fond 11. Le joint de maintien 2 de la vitre 38 comprend une paroi externe 12 et une paroi interne 13 qui sont reliées par un fond 14. La gouttière 1 et le joint de maintien 2 sont conformés de manière à ce que leurs parois internes respectives 10 et 13 soient reliées par un élément de liaison 3.

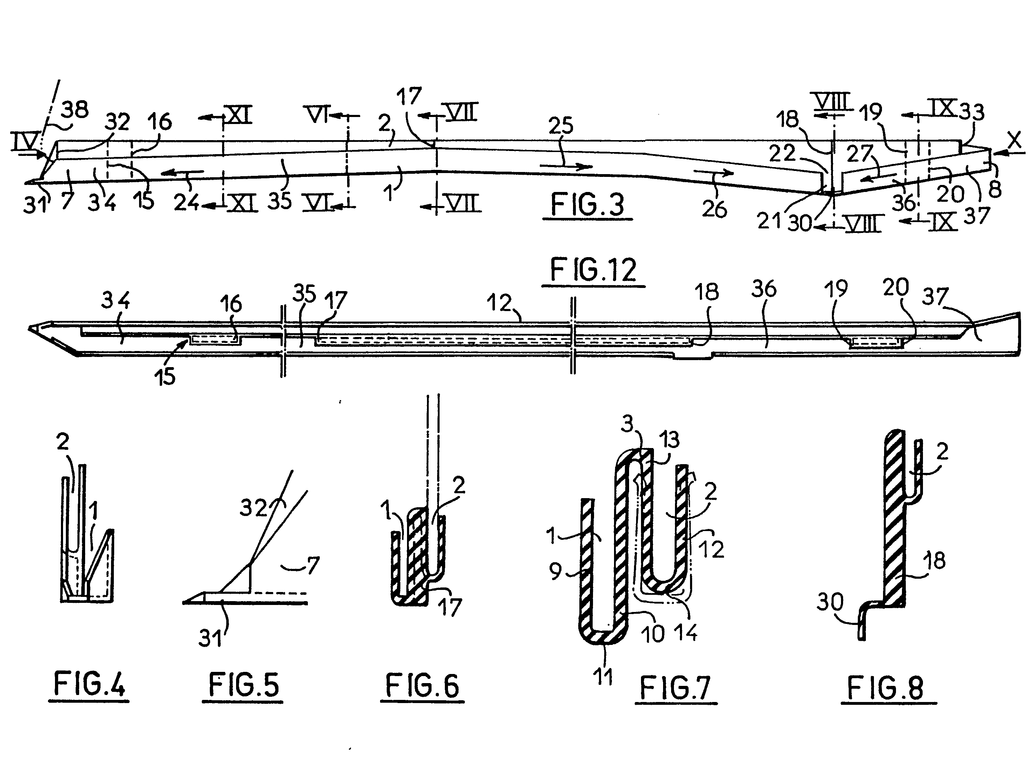

Comme on peut le voir sur les figures 3 et 12, la gouttière 1 et le joint de maintien 2 qui sont reliés par l'élément de liaison 3, sont munis:

— de deux cloisons 15 et 16 de manière à recevoir la première agrafe de maintien 6,

— de deux cloisons 17 et 18, de manière à recevoir le bas de vitre métallique 4 avec l'attache 5,

— de deux cloisons 19 et 20, de manière à recevoir la deuxième agrafe de maintien 6.

On voit sur la figure 6 la cloison 17 qui lie la gouttière 1 et le joint de maintien 2, et sur la figure 8 la coison 18. La figure 7 montre la disposition d'une des agrafes de maintien 6 sur le joint de maintien 2.

Dans les autres zones du dispositif de récupération d'eau selon l'invention, qui ne reçoivent pas le bas de vitre métallique 4, ou les agrafes de maintien 6, la paroi interne 10 de la gouttière 1 et la paroi interne 13 du joint de maintien 2 sont dans le même plan. Ces zones sont au nombre de 4 et sont repérées 34, 35, 36 et 37. La figure 11 représente la position des parois internes 10 et 13 dans ces zones.

Le joint de maintien 2 est ouvert à chacune de ces extrémités 32 et 33 de manière à recevoir la vitre 38.

La gouttière 1 a une partie basse d'évacuation 21 qui débouche dans un orifice 22. Cet orifice 22 est muni d'une languette d'écoulement 30, comme cela est représenté sur les figures 3 et 8.

La gouttière 1 a une extrémité 7 qui est débouchante, et une extrémité 8 qui est fermée par une paroi d'extrémité 28. Il faut noter que dans un autre de mode de réalisation de l'invention l'extrémité 7 pourrait avoir une paroi d'extrémité qui n'est pas représentée sur les figures.

L'extrémité 7 de la gouttière 1 est munie d'une languette d'écoulement 31.

Afin de pouvoir canaliser et amener l'eau de ruissellement au point voulue de la gouttière 1, cette gouttière 1 a son fond 11 qui a:

— une pente d'amenée 24, pour canaliser l'eau de ruissellement vers l'extrémité 7,

— une pente d'amenée 25 qui se prolonge par une pente d'amenée 26 afin de canaliser l'eau de ruissellement vers l'orifice d'écoulement 22,

— une pente d'amenée 27 afin de canaliser l'eau de ruissellement de l'extrémité 8 vers l'orifice d'écoulement 22.

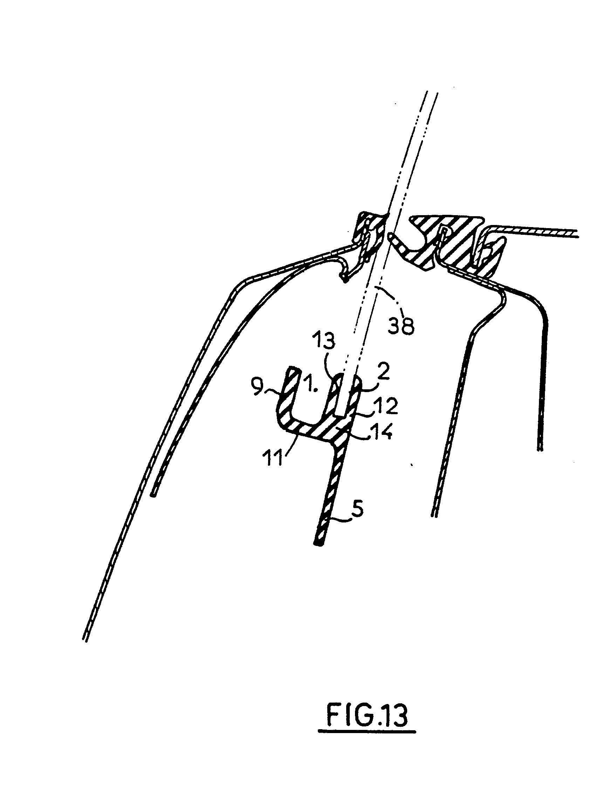

Un autre mode de réalisation de l'invention est représenté sur la figure 13, et il comporte une gouttière 1 solidaire d'un joint de maintien 2 de la vitre mobile 38. Ce joint de maintien 2 est équipé d'un dispositif de tenue mécanique 5 associé au mécanisme de lève-vitre.

La gouttière 1 comprend deux parois, une paroi externe 9, et une paroi interne 10 qui sont reliées par un fond 11. Le joint de maintien 2 de la vitre 38 comprend une paroi externe 12 et une paroi interne 13 qui sont reliées par un fond 14. Dans ce mode de réalisation les parois internes 10 et 13 sont dans le même plan et confondues.

Dans ce mode de réalisation, les cloisons 15-16-19 et 20 sont supprimées ainsi que les agrafes de maintien 6, ainsi que les cloisons 17 et 18, et le bas de vitre métallique 4.

De plus les zones 34, 35, 36 et 37, représentées sur les figures 3 et 12 disparaissent.

Ainsi la figure 13 représente le système sur toute sa longueur.

## Revendications

1. Dispositif de récupération d'eau pour système d'étanchéité de vitre mobile (38) notamment de véhicule automobile, ayant un joint de maintien (2) de la vitre (38) sur lequel (2) celle-ci (38) est montée et une gouttière (1) solidaire du joint de maintien (2) et longeant ce joint (2), caractérisé en ce que la gouttière (1) comporte au moins une partie basse d'évacuation (21) qui a des pentes d'amenée (25, 26, 27) afin de canaliser l'eau de ruissellement vers un orifice (22) situé le long de la gouttière (1) et que le joint de maintien (2) s'engage dans un dispositif mécanique (4, 5, 6) de tenue de la vitre (38).

2. Dispositif de récupération d'eau selon la revendication 1, caractérisé en ce qu'une extrémité (8) de la gouttière (1) est fermée par une paroi d'extrémité (28).

3. Dispositif de récupération d'eau selon la revendication 1, caractérisé en ce que les deux extrémités (7 et 8) de la gouttière (1) sont fermées respectivement par des parois d'extrémités (29 et 28).

4. Dispositif de récupération d'eau selon la revendication 1, caractérisé en ce que l'orifice d'écoulement (22) a une languette d'écoulement (30).

5. Dispositif de récupération d'eau selon la revendication 1, caractérisé en ce qu'une extrémité (7) de la gouttière (1) comporte une languette d'écoulement (31).

6. Dispositif de récupération d'eau selon la revendication 1, caractérisé en ce que le dispositif mécanique de tenue de vitre (38) comprend:

— un bas de vitre métallique (4) solidaire d'une attache (5), qui est associée au mécanisme de lève-vitres,

— deux agrafes de maintien (6).

7. Dispositif de récupération d'eau selon les revendications 1 et 6, caractérisé en ce que la gouttière (1) et le joint de maintien (2) sont conformés de manière à ce que leurs parois internes respectives (10 et 13) soient reliées par un élément de liaison (3), et soient munis de cloisons (15, 16, 17, 18, 19 et 20) de façon à délimiter des zones pour recevoir le bas de vitre métallique (4) avec l'attache (5), et les deux agrafes de maintien (6); les parois internes (10 et 13) étant dans un même plan dans les autres zones (34, 35, 36 et 37) du dispositif de récupération d'eau.

8. Dispositif de récupération d'eau selon la revendication 1, caractérisé en ce que le dispositif mécanique de tenue de vitre (38) comprend une attache (5) solidaire du joint de maintien (2); et qui est associée au mécanisme de lève-vitres; la paroi interne (10) de la gouttière (1) et la paroi interne (13) du joint de maintien (2) étant dans le même plan.

## Patentansprüche

1. Entwässerungsvorrichtung für ein Abdichtungssystem für ein zu öffnendes Fenster (38), insbesondere eines Kraftfahrzeuges, mit einer Klemmdichtung (2) für das Fenster (38), auf der es angeordnet ist und mit einer Ablaufrinne (1), die mit der Klemmdichtung (2) fest verbunden ist und entlang der Dichtung (2) verläuft, dadurch gekennzeichnet, daß die Ablaufrinne (1) wenigstens einen unteren Abfuhrabschnitt (21) aufweist mit Flanken (25, 26, 27), um das ablaufende Wasser zu einer Öffnung (22) zu leiten, die längs der Ablaufrinne (1) angeordnet ist und daß die Klemmdichtung (2) in eine mechanische Halteanordnung (4, 5, 6) für das Fenster (38) eingreift.

2. Entwässerungsvorrichtung nach Anspruch 1, dadurch gekennzeichnet, daß ein Ende (8) der Ablaufrinne (1) durch eine Endwand (28) verschlossen ist.

3. Entwässerungsvorrichtung nach Anspruch 1, dadurch gekennzeichnet, daß die beiden Enden (7 und 8) der Ablaufrinne (1) durch Endwände (29 und 28) verschlossen sind.

4. Entwässerungsvorrichtung nach Anspruch 1, dadurch gekennzeichnet, daß die Ablauföffnung (22) mit einer Ablauflasche (30) versehen ist.

5. Entwässerungsvorrichtung nach Anspruch 1, dadurch gekennzeichnet, daß ein Ende (7) der Ablaufrinne (1) eine Ablauflasche (31) aufweist.

6. Entwässerungsvorrichtung nach Anspruch 1, dadurch gekennzeichnet, daß die mechanische Halteanordnung für das Fenster (38) aufweist:
— eine metallische Halterung (4), die fest mit einem Klemmstück (5) verbunden ist, das dem Fensterheber zugeordnet ist und
— zwei Halteklammern (6).

7. Entwässerungsvorrichtung nach Ansprüchen 1 und 6, dadurch gekennzeichnet, daß die Ablaufrinne (1) und die Klemmdichtung (2) derart ausgestaltet sind, daß ihre entsprechenden Innenwände (10 und 13) durch ein Verbindungsteil (3) miteinander verbunden sind und daß sie Querwände (15, 16, 17, 18, 19 und 20) derart aufweisen, daß sie Abschnitte begrenzen zur Aufnahme der metallischen Halterung (4) mit dem Klemmstück (5) und den beiden Halteklammern (6); die Innenwände (10 und 13) liegen in einer selben Ebene in den anderen Abschnitten (34, 35, 36 und 37) der Entwässerungsvorrichtung.

8. Entwässerungsvorrichtung nach Anspruch 1, dadurch gekennzeichnet, daß die mechanische Halteanordnung für das Fenster (38) ein Klemmstück (5) aufweist, das fest mit der Klemmdichtung (2) verbunden ist sowie mit dem Fensterheber; die Innenwand (10) der Ablaufrinne (1) und die Innenwand (13) der Klemmdichtung (2) liegen in derselben Ebene.

## Claims

1. A water recovery arrangement for a system for sealing a movable window (38), in particular in a motor vehicle, having a seal (2) for holding the window (38), the window (38) being mounted on the seal (2), and a gutter (1) which is fixed with respect to the holding seal (2) and which extends along said seal (2) characterised in that the gutter (1) comprises at least one low discharge portion (21) which has drainage slopes (25, 26, 27) in order to channel the flow of water towards an opening (22) disposed along the gutter (1) and the holding seal (2) is engaged into a mechanical device (4, 5, 6) for holding the window (38).

2. A water recovery arrangement according to claim 1 characterised in that one end (8) of the gutter (1) is closed by an end wall (28).

3. A water recovery arrangement according to claim 1 characterised in that the two ends (7 and 8) of the gutter (1) are respectively closed by end walls (29 and 28).

4. A water recovery arrangement according to claim 1 characterised in that the drain opening (22) has a drain tongue portion (30).

5. A water recovery arrangement according to claim 1 characterised in that an end (7) of the gutter (1) comprises a drain tongue portion (31).

6. A water recovery arrangement according to claim 1 characterised in that the mechanical device for holding the window (38) comprises:
— a metal window bottom member (4) fixed with respect to a connecting portion (5) which is associated with the window raising mechanism, and
— two holding clips (6).

7. A water recovery arrangement according to claims 1 and 6 characterised in that the gutter (1) and the holding seal (2) are so shaped that their respective internal walls (10 and 13) are connected by a connecting element (3) and are provided with partitions (15, 16, 17, 18, 19, 20) so as to delimit zones for receiving the metal window bottom member (4) with the connecting portion (5) and the two holding clips (6); the internal walls (10 and 13) being in the same plane in the other zones (34, 35, 36 and 37) of the water recovery arrangement.

8. A water recovery arrangement according to claim 1 characterised in that the mechanical device for holding the window (38) comprises a connecting portion (5) which is fixed with respect to the holding seal (2) and which is associated with the window raising mechanism; the internal wall (10) of the gutter (1) and the internal wall (13) of the holding seal (2) being in the same plane.

**FIG.1**

FIG.2

40

38

3

1

2

4

5

FIG.9

38

13

2

12

1

6

9

10

FIG.10

9

12

12

28

FIG.11

13

12

9

10

FIG.3

FIG.12

FIG.4  FIG.5  FIG.6  FIG.7  FIG.8

EP 0 209 423 B1

FIG.13